Europäisches Patentamt

European Patent Office

Office européen des brevets

(11) Publication number: 0 379 009 A2

# (12) EUROPEAN PATENT APPLICATION

(21) Application number: 90100206.3

(22) Date of filing: 05.01.90

(51) Int. Cl.⁵: B23Q 3/12, B23B 31/02

(30) Priority: 20.01.89 IT 4150389

(43) Date of publication of application:
25.07.90 Bulletin 90/30

(84) Designated Contracting States:
AT BE CH DE DK ES FR GB GR LI LU NL SE

(71) Applicant: VALEX INTERNATIONAL S.p.A.
Via dell'Artigianato, 35 Z.A.
I-36035 Marano Vicentino (Vicenza)(IT)

(72) Inventor: Carbone, Matteo
Via Manin 19
I-36010 Zane' (Province of Vicenza)(IT)

(74) Representative: Modiano, Guido et al
MODIANO, JOSIF, PISANTY & STAUB
Modiano & Associati Via Meravigli, 16
I-20123 Milano(IT)

(54) Quick-coupling device particularly for coupling rotating tools to a driving unit.

(57) The quick-coupling device according to the invention comprises a driving shaft support (2) to which the support (13) of a driven shaft is coaxially associable so as to rigidly associate the two shafts. Centering means (1, 14) for the driven shaft support are provided on the driving shaft support and ring means (19) for locking the supports are rotatably associated therewith.

FIG. 5

# QUICK-COUPLING DEVICE PARTICULARLY FOR COUPLING ROTATING TOOLS TO A DRIVING UNIT

The present invention relates to a quick-coupling device particularly for coupling rotating tools to a driving unit.

In workshop activity it is currently indispensable to use rotating tools such as sanding machines, grinders, brushes or other finishing and/or cleaning tools.

It is known that such rotating tools are currently mounted on table-top driving units which are appropriately provided, for this purpose, with one or two shafts which are moved by an electric motor and to which said tools are fixed by bolting or with other locking means.

Each tool is currently changed exclusively for replacement due to wear, and entails difficulties and slowness in operation which prevent its execution during normal work.

This is why a plurality of driving units, each equipped with one or at the most two tools, is currently present in workshops.

The aim of the present invention is to provide a quick-coupling device which, when applied to a driving unit, allows to rapidly couple a plurality of rotating tools to said unit and to uncouple them therefrom.

A consequent primary object is to provide a quick-coupling device the actuation whereof also mutually centers the coupled parts.

Another important object is to provide a quick-coupling device which allows to reduce the costs of workshop equipment by requiring a single driving unit for a plurality of tools.

Still another object is to provide a quick-coupling device provided with a safety apparatus which enables the motion of the motor only after the exact centering and fixing of the parts.

Not least object is to provide a quick-coupling device which can be produced at low cost with conventional production systems.

This aim, these objects and others which will become apparent hereinafter are achieved by a quick-coupling device, particularly for coupling rotating tools to a driving unit, as defined in claim 1.

The characteristics and advantages of the invention will become apparent from the detailed description of an embodiment thereof, illustrated only by way of non-limitative example in the accompanying drawings, wherein:

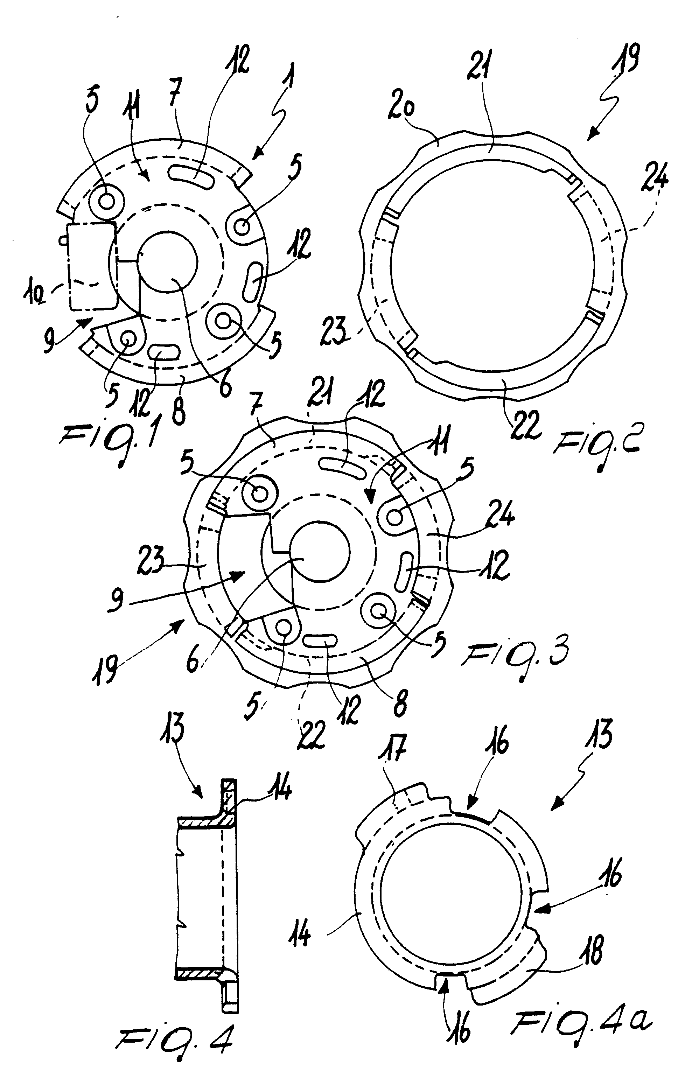

figure 1 is a front view of a flange for centering the driven shaft support on the driving shaft support;

figure 2 is a front view of a rotating ring for locking the driving shaft support and the driven shaft support;

figure 3 is a front view of the elements of figures 1 and 2 in assembled condition;

figure 4 and 4a are a sectional view and a front view of the end of the driven shaft support which is associable with the driving shaft support;

figures 5 and 6 are general views of the quick-coupling device according to the invention during the mutual locking of the parts;

figure 7 is a schematic view of the various possibilities for coupling various rotating tools to a single driving unit; and

figure 8 is a schematic, partial view of a driving unit as coupled to a rotating tool.

With reference to the above figures, a quick-coupling device according to the invention comprises a substantially disk-like centering flange 1 which is fixed to a support 2 from which the grooved end of a driving shaft 3 of a driving unit 4 protrudes.

Said flange 1 is fixed to said support 2, so as to be coaxial to the shaft 3, by means of Allen screws which are inserted in appropriate through holes 5 of the flange 1 and engage in threaded holes, not illustrated, of the support 2.

Said flange 1 is provided with a central hole 6, in which said grooved end of the driving shaft 3 is inserted, and, on diametrically opposite circumferential portions, with two first outer raised portions in the shape of an arc of a circular crown, respectively 7 and 8, which have a smaller depth than said flange 1 and are arranged on the side of said flange which is not associated with the support 2.

Said flange 1 is furthermore provided with a recess 9 in which a safety microswitch 10 is accommodated; its function is to prevent the movement of the motor of the unit 4 if the coupling device is not perfectly locked and centered.

On its outward planar surface 11, said flange 1 has three arc-like raised portions 12 arranged along a same circumference and adapted to center the end 13 of the support of the driven shaft which bears a rotating tool.

Said end 13, which is appropriately tubular with a cylindrical extension, has a flange 14 adapted to rest, possibly with a rubber gasket 15 interposed, on said planar surface 11 of the flange 1, and has seats 16 countershaped to said arc-like raised portions 12.

Two second outer raised portion in the shape of arcs of a circular crown, respectively 17 and 18, extend circumferentially in diametrically opposite positions from said flange 14 to lock it to the rest of the device.

Still according to the invention, a fixing ring 19 is rotatably associated with said flange 1 and is substantially composed of a circular crown 20 which embraces said flange 1 and has, at the circumferential region which is not affected by said raised portions 7 and 8, two first diametrically opposite inner raised portions in the shape of an arc of a circular crown, resp. 21 and 22, which have such an extension as to prevent the extraction of the flange 1 and therefore constitute resting elements for fixing the device.

The axial extension of said ring 19 is such that when the end 13 of the support of the driven shaft is mounted, the flange 14 is also surrounded by the circular crown 20, which has, on the same side, two second diametrically opposite internal raised portions in the shape of an arc of a circular crown, respectively 23 and 24, adapted to engage, upon rotation of said ring 19, on said raised portions 17 and 18 of the end 13 so as to lock it.

From the above, the steps for coupling the device according to the invention are evident; they essentially consist in resting the end 13 on the surface 11 of the flange 1, by accommodating the raised portions 12 in their seats 16, and in rotating the ring 19 until its second internal raised portions 23 and 24 engage against the second outer raised portions 17 and 18.

The grooved end of the driving shaft 3 naturally enters an appropriate complementarily shaped grooved seat of the driven shaft.

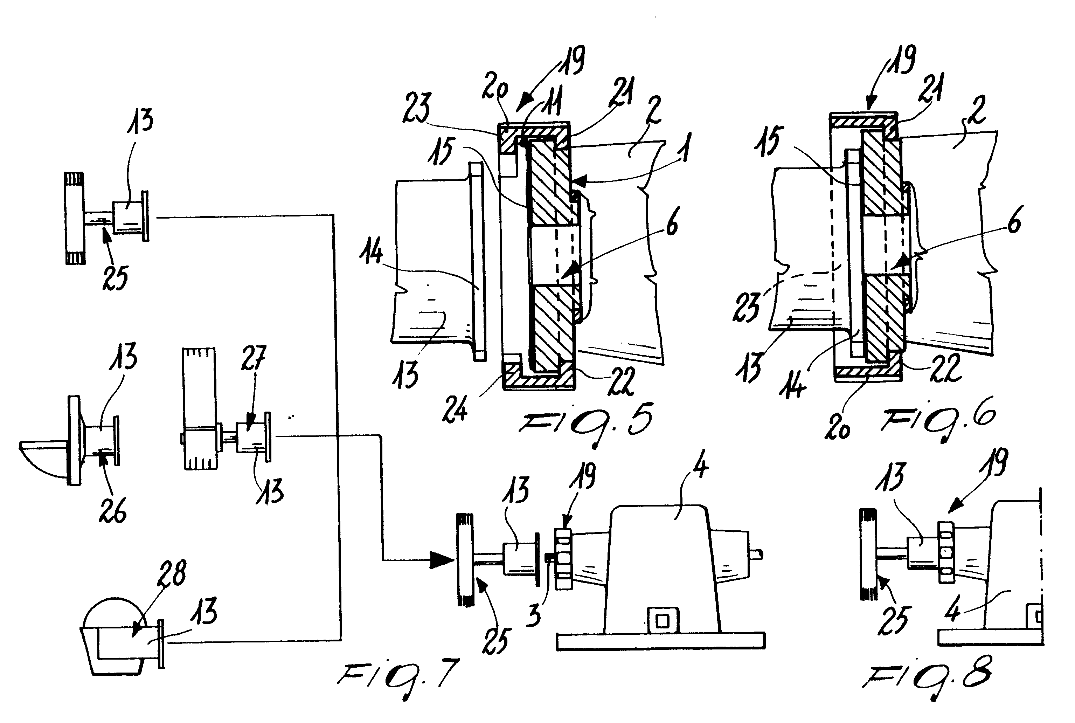

Figure 7 schematically illustrates some of the rotating tools which, if appropriately provided with a support 13, may be rapidly fixed to a single driving unit 4.

Said tools may be a cleaning brush 25, a disk sander 26, a band sander 27, a water grinder 28.

It is thus clear that the aim and objects of the present invention have been brilliantly achieved, since a coupling device has been provided which allows a series of rotating tools to be rapidly interchanged on a same driving unit.

In this manner, the costs of the equipment required for workshop finishing work, for which many driving units each provided with one or at the most two tools such as grinders, sanding machines etc. are currently provided, are reduced.

The invention thus conceived is susceptible to numerous modifications and variations, all of which are within the scope of the inventive concept.

All the details may furthermore be replaced with other technically equivalent elements.

In practice, the materials employed, so long as compatible with the contingent use, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A quick-coupling device particularly for coupling rotating tools to a driving unit (4), comprising a driving shaft support (2) to which the support (13) of a driven shaft is coaxially associable, so as to rigidly associate said two shafts, characterized in that it comprises, on said driving shaft support (2), centering means (1, 14) for said driven shaft support (13), ring means (19) for locking the parts being rotatably and coaxially associated with said centering means.

2. A quick-coupling device according to claim 1, characterized in that said means for centering said driven shaft support comprises a substantially circular centering flange (1) coaxially fixed to the support (2) of the driving shaft (3), said centering flange having a central hole (6) crossed by said driving shaft and, on diametrically opposite circumferential portions, two first outer raised portions (7, 8) in the shape of an arc of a circular crown which have a smaller depth than said centering flange (1) and extend at a distance from the region of coupling to the support.

3. A coupling device according to claims 1 and 2, characterized in that the surface (11) of said centering flange (1) which is opposite to the coupling surface is substantially planar and is provided with raised portions (12) for complementarily shaped seats (16) of the end (13) of said driven shaft support, said end being cylindrical with a circumferential flange (14) for resting on said surface (11) possibly with a rubber gasket (15) interposed.

4. A coupling device according to any of the preceding claims, characterized in that said centering flange (1) has a recess (9) which accommodates a safety microswitch (10) adapted to prevent the activation of the driving unit (4) if the parts are not mutually centered and locked.

5. A coupling device according to any of the preceding claims, characterized in that said circumferential flange (14) of said end (13) of the driven shaft support has, on diametrically opposite circumferential portions, two second outer raised portions (17, 18) in the shape of an arc of a circular crown.

6. A coupling device according to any of the preceding claims, characterized in that said ring means comprises a ring (19) having a circular crown (20) which embraces said centering flange (1) and said circumferential flange of said end (13) of the driven shaft support, said crown having two first internal and diametrically opposite raised portions (21, 22) which can slide along the portion of said centering flange which is adjacent to the driving shaft support (2), said first internal raised portions having such an extension as to prevent extraction of the ring from the centering flange, and two second internal and diametrically opposite raised portions (23, 24) adapted to engage, upon rotation, on said second outer raised portions (17, 18) of the circumferential flange (14) of said end (13) of the driven shaft.

7. A device according to any of the preceding claims, characterized in that the protruding end (3) of said driving shaft is grooved and adapted to insert in a corresponding grooved seat of said driven shaft.

8. A device according to any of the preceding claims, characterized in that said rotating tools are of various kinds, such as disks, grinders (28), brushes (25), abrasive bands (27) which constitute independent interchangeable units.

EP 0 379 009 A2

Fig.1

Fig.2

Fig.3

Fig.4

Fig.4a

Fig. 5

Fig. 6

Fig. 7

Fig. 8

EP 0 379 009 A2